(19) Europäisches Patentamt
European Patent Office
Office européen des brevets

(11) **EP 0 920 464 B1**

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(21) Anmeldenummer: **97941951.2**

(22) Anmeldetag: **21.08.1997**

(51) Int Cl.⁷: **C08F 220/12**, C09J 133/06, C09J 7/04

(86) Internationale Anmeldenummer:
**PCT/EP97/04553**

(87) Internationale Veröffentlichungsnummer:
**WO 98/07767 (26.02.1998 Gazette 1998/08)**

(54) **HERSTELLUNG HOCHKONZENTRIERTER HAFTKLEBSTOFFDISPERSIONEN UND DEREN VERWENDUNG**

PRODUCTION OF HIGHLY CONCENTRATED ADHESIVE DISPERSIONS AND THEIR USE

PROCEDE DE PREPARATION DE DISPERSIONS D'ADHESIFS A HAUTE CONCENTRATION ET LEUR UTILISATION

(84) Benannte Vertragsstaaten:
**BE CH DE ES FI FR GB IT LI NL**

(30) Priorität: **22.08.1996 DE 19633967**

(43) Veröffentlichungstag der Anmeldung:
**09.06.1999 Patentblatt 1999/23**

(73) Patentinhaber: **BASF AKTIENGESELLSCHAFT**
**67056 Ludwigshafen (DE)**

(72) Erfinder:
• **REHMER, Gerd**
  **D-67259 Beindersheim (DE)**
• **STANGER, Bernd**
  **D-67373 Dudenhofen (DE)**
• **AUCHTER, Gerhard**
  **D-67098 Bad Dürkheim (DE)**
• **TÜRK, Johannes**
  **D-67459 Böhl-Iggelheim (DE)**
• **AYDIN, Oral**
  **D-68165 Mannheim (DE)**
• **FÜSSL, Rüdiger**
  **D-67435 Neustadt (DE)**

(74) Vertreter: **Kinzebach, Werner, Dr. et al**
**Reitstötter, Kinzebach & Partner,**
**Postfach 21 11 60**
**67011 Ludwigshafen (DE)**

(56) Entgegenhaltungen:
**EP-A- 0 037 923**    **US-A- 3 637 563**

**Beschreibung**

Die Erfindung betrifft Verfahren zur Herstellung filtrierbarer desodorierter hochkonzentrierter wässriger Haftklebstoffdispersionen auf der Basis von Copolymerisaten von Estern der Acryl-und/oder Methacrylsäure, so hergestellte Produkte und deren Verwendung.

Polymerisatdispersionen, die in der Klebstoffindustrie zur Herstellung haftklebriger Artikel verwendet werden, müssen hohe Qualitätsanforderungen erfüllen. So müssen sich ihre Eigenschaften in relativ engen Grenzen reproduzieren lassen, damit eine Weiterverarbeitung problemlos möglich wird. Generell ist die Verarbeitung von wässrigen Dispersionen wirtschaftlicher und umweltfreundlicher als die Verarbeitung von Systemen, die organische Lösungsmittel enthalten, weil aufwendige Anlagen zur Rückgewinnung der organischen Lösungsmittel entfallen. Hochkonzentrierte wässrige Haftklebstoffdispersionen gehen in der Wirtschaftlichkeit und Umweltverträglichkeit noch einen Schritt weiter, weil bei ihrer Verarbeitung weniger Wasser verdampft werden muß und somit weniger Energie verbraucht wird als bei der Verarbeitung von wässrigen Dispersionen mit geringerem Polymerisatgehalt. Auch der Transport hochkonzentrierter Dispersionen ist im Vergleich zum Transport weniger konzentrierter Dispersionen rationeller. Für die Verarbeitung der wässrigen Polymerisatdispersionen zu Produkten des täglichen Gebrauchs müssen die Dispersionen weitgehend frei von flüchtigen Anteilen sein. Flüchtige Anteile sind insbesondere nicht umgesetzte Monomere und gesättigte Bestandteile in den verwendeten Monomeren. wobei letztere naturgemäss nicht durch die Polymerisationsreaktion entfernt werden können. Zur Entfernung der flüchtigen Anteile werden die Polymerisatdispersionen nach ihrer Herstellung mit Wasserdampf behandelt (desodoriert). Für das Desodorieren müssen die Polymerisatdispersionen hinreichend stabil sein, da sich sonst beim Desodorieren Verklumpungen bzw. Koagulat bilden, die den Feststoffgehalt der Dispersionen mindern. Diese Koagulatbildung tritt bei hochkonzentrierten Polymerisatdispersionen besonders leicht auf. Koagulathaltige Dispersionen sind nicht einfach filtrierbar, sondern bedürfen für ihre weitere Verwendung als hochkonzentrierte Haftklebstoffdispersionen besonderer aufwendiger Verfahren zur Abtrennung des Koagulats.

Es hat nicht an Bemühunge gefehlt, hochkonzentrierte wässrige Polymerdispersionen mit Feststoffgehalten bzw. Polymerisatgehalten von über 65 Gew.% herzustellen. So ist in der EP-A 0 065 253 ein Verfahren zur Herstellung hochkonzentrierter wässriger Polyacrylatdispersionen nach dem sogenannten Monomerenemulsionszulauf-Polymerisationsverfahren beschrieben, wobei die resultierenden Polymerisatdispersionen für die Lederzurichtung verwendet werden. Es wird aufgezeigt, daß nur bei Mitverwendung eines speziellen Emulgators, eines Sulfobernsteinsäuredialkylesters mit 8 bis 18 C-Atomen in den Alkylresten, filtrierbare Polymerisatdispersionen erhalten werden. Die so hergestellten hochkonzentrierten Polymerisatdispersionen schwanken jedoch stark in ihren Eigenschaften, wie in ihren Viskositäten.

In der EP-B 0 037 923 wird ebenfalls ein Verfahren zur Herstellung hochkonzentrierter wässriger Polyacrylatdispersionen nach dem Monomerenemulsionszulauf-Polymerisationsverfahren beschrieben, doch entspricht auch da die Reproduktion der nach dem Verfahren hergestellten Dispersionen nicht den heutigen Qualitätsanforderungen, weil auch hier deutliche Eigenschaftsschwankungen auftreten. Auch zeigen die erhaltenen hochkonzentrierten wässrigen Polymerisatdispersionen nur eine begrenzte Stabilität beim Desodorieren. Zudem enthält das Verfahren unerwünschte Einschränkungen hinsichtlich der Monomerenauswahl, des Gehalts an Inhibitor-Minimalmengen und der Zusammensetzung der wässrigen Phase der Vorlage im Polymerisationsreaktor, die nachteilig sind.

Der vorliegenden Erfindung liegt die Aufgabe zugrunde, filtrierbare und desodorierbare, hochkonzentrierte wässrige Haftklebstoffdispersionen mit einem gut reproduzierbaren Eigenschaftsprofil nach einem Verfahren herzustellen, das die nachteiligen Beschränkungen der vorstehend genannten bekannten Verfahren nicht aufweist.

Diese Aufgabe wird gelöst mit einem Verfahren zur Herstellung gut filtrierbarer und desodorierbarer, hochkonzentrierter wässriger Haftklebstoffdispersionen mit gut reproduzierbaren Eigenschaften auf der Basis von Copolymerisaten von Estern der Acryl- und/oder Methacrylsäure, wobei die Copolymerisate Glasübergangstemperaturen von nicht mehr als 0 °C aufweisen, durch Emulsionspolymerisation in Gegenwart übliche Emulgatoren und radikalischer Polymerisationsinitiatoren nach dem Monomerenemulsionszulauf-Polymerisationsverfahren, bei dem die Monomerenemulsion im Zulauf dem Polymerisationsreaktor zugefahren wird, das dadurch gekennzeichnet ist, dass man die Emulsionspolymerisation einer Monomerenmischung aus (A) mindestens 50 Gew.% der Gesamtmonomerenmenge mindestens eines Esters der Acryl- und/oder Methacrylsäure mit Alkoholen mit 1 bis 18 C-Atomen und (B) anderen olefinisch ungesättigten Monomeren (Comonomeren)

a) in Gegenwart von weniger als 50 ppm Polymerisationsinhibitor, bezogen auf die Monomerenmenge, nach dem Monomerenemulsionszulauf-Polymerisationsverfahrens so durchführt, dass

b) zur auf 30 bis 110 °C erhitzten wässrigen Vorlage im Polymerisationsreaktor

c) 1 bis 10 Gew.% der im Zulauf zugegebenen Menge der Monomerenemulsion innerhalb von 1/4 bis 1 Stunde ab Zulaufbeginn in pro Zeiteinheit zunehmender Menge zugegeben wird, und

d) danach die restliche Menge der Monomerenemulsion in an sich üblicher Art nach Maßgabe der Polymerisation der Monomeren stetig zugefahren wird.

Gemass dem erfindungsgemässen Verfahren erfolgt die Herstellung der wässrigen Haftklebstoffdispersionen durch Emulsionpolymerisation der Monomeren nach dem Monomerenemulsionzulauf-Polymerisationsverfahren, bei dem eine wässrige Phase, ggf. unter Zusatz von Hilfsmitteln, im Polymerisationsreaktor vorgelegt wird und man dann die zu polymerisierende Monomerenemulsion zulaufen lässt. In der wässrigen Vorlage, die im allgemeinen etwa 10 bis 50 und insbesondere 25 bis 50 Gew.% der gesamten Wassermenge von Vorlage plus Zulauf enthält, wird vor Zulaufbeginn bevorzugt mindestens ein wasserlösliches Salz, insbesondere in einer Menge von etwa 1 bis 7 Gew.%, bezogen auf die Vorlage, gelöst. Die insbesondere anorganischen Salze sind meist Polyelektrolyte, wie sie auch als Puffersubstanzen dienen, wie Gemische aus primären, sekundären und tertiären Alkali- oder Ammoniumphosphaten sowie insbesondere Natriumpyrophosphat. Ferner eignen sich als Salze z.B. Natriumchlorid, Natriumbicarbonat, Calciumsulfat, Magnesiumphos-phat, Ammoniumchlorid und/oder Natriumsulfat. Als geeignetes Salz einer organischen Verbindung sei das Natriumsalz der Ethylendiamintetraessigsäure genannt. Die wässrige Vorlage wird vor dem Beginn des Zulaufs der Monomerenemulsion auf eine Temperatur erhitzt, die im allgemeinen im Bereich von 30 bis 110°C, insbesondere 70 bis 95°C, liegt.

Das erfindungsgemässe Verfahren erfolgt bevorzugt in Gegenwart von 0,01 bis 5 und insbesondere 0,05 bis 2 Gew.%, bezogen auf die Monomerenmenge, eines Reduktionsmittels, das der wässrigen Vorlage und/oder dem Monomerenemulsionszulauf zugesetzt werden kann. Auf die Zugabe des Reduktionsmittels zur Vorlage (bzw. dem Emulsionszulauf) kann in manchen Fällen verzichtet werden, insbesondere dann, wenn nur relativ geringe K-Werte erreicht werden sollen. Als Reduktionsmittel sind organische und anorganische Reduktionsmittel wie Ascorbinsäure, Acetonbisulfit, Reduktionsmittel auf der Basis von Sulfinsäurederivaten, wie das Natriumsalz der Hydroxymethansulfinsäure, Natriumbisulfit oder komplexierte mehrwertige Metallionen, wie solche des Eisens oder Vanadiums, z.B. Eisen (II)-ammoniumsulfat geeignet. Bevorzugt sind organische Reduktionsmittel und von diesen Ascorbinsäure. Durch die Wahl der Menge, bezogen auf die Gesamtmonomerenmenge, des Reduktionsmittels im Monomerenemulsionszulauf kann relativ einfach der K-Wert, d.h. das Molekulargewicht des resultierenden Emulsionspolymerisats eingestellt werden.

Bei der Polymerisationsreaktion können auch sogenannte Regler zugesetzt werden, insbesondere in Mengen von bis zu 0,5 Gew.% der Monomerenmenge, die den Polymerisationsgrad der resultierenden Emulsionspolymerisate senken. Beispiele solcher Regler sind Mercaptane wie tert.Dodecylmercaptan, Ethylhexylthioglykolat oder 3-Mercaptopropyltrimethoxysilan oder ungesättigte Verbindungen mit allyl-ständigen Wasserstoffatomen wie Butenol.

Als Polymerisationsinitiatoren für das erfindungsgemässe Verfahren können die für eine Emulsionspolymerisation üblichen, radikalbildenden organischen und anorganischen Polymerisationsinitiatoren in üblichen Mengen verwendet werden, die vor, zu Beginn oder während des Zulaufs der Monomerenemulsion dem Reaktor zudosiert werden. Die Initiatoren können bereits vor oder beim Erhitzen der wässrigen Vorlage im Polymerisationsreaktor vorhanden sein. Zweckmässiger werden die Initiatoren der Vorlage erst zugesetzt, wenn die wässrige Vorlage die gewünschte Reaktionstemperatur von 30 bis 110 und insbesondere 70 bis 95 °C erreicht hat. Die Zugabe des Polymerisationsinitiators in den Reaktor kann auch mit der Zugabe der Monomerenemulsion in Zeitabständen oder stetig erfolgen. Bevorzugte Polymerisationsinitiatoren sind solche, die wasserlöslich sind, wie Natrium-, Ammonium- und/oder Kaliumperoxodisulfate sowie Redoxinitiatoren, wie Gemische von z.B. Peroxodisulfaten oder Wasserstoffperoxid mit Reduktionsmitteln wie Natriumhydrogensulfit, Ascorbinsäure oder dem Natriumsalz der Hydroxymethansulfinsäure ($HOH_2C-SO_2Na$) (Rongalit® C der BASF). Als Emulgatoren kommen vor allem übliche anionische Emulgatoren in üblichen Mengen, z.B. einer Menge von 0,5 bis 3 Gew.% der Monomerenmenge, in Frage. Als geeignete Emulgatoren seien genannt Natrium-Laurylsulfat, Natrium-Alkylsulfonate mit 11 bis 17 C-Atomen im Alkylrest, Natrium-Alkylarylsulfonate mit 8 bis 12 C-Atomen im Alkylrest, die Natriumsalze der Schwefelsäureester von mit 5 bis 30 Molen Ethylenoxid ethoxylierten Alkylphenolen mit 8 bis 12 C-Atomen im Alkylrest und die Natriumsalze von Sulfaten von mit 10 bis 20 Molen Ethylenoxid oxethylierten Alkoholen mit 8 bis 18 C-Atomen. Zusätzlich können, insbesondere in einer Menge von 0 bis 2 Gew.% der Monomerenmenge, nichtionische Emulgatoren mitverwendet werden, wie ethoxylierte langkettige Alkohole oder ethoxylierte Alkylphenole mit 8 bis 12 C-Atomen im Alkylrest.

Im Unterschied zu dem in der EP-B 0037923 beschriebenen Verfahren (Spalte 1, Zeilen 43-46) ist es nicht erforderlich, dass ein anionischer Emulgator in der wässrigen Vorlage enthalten ist, was beim erfindungsgemässen Verfahren von Nachteil wäre, da dann relativ hochviskose Dispersionen erhalten werden. Beim erfindungsgemässen Verfahren enthält somit bevorzugt nur der Monomerenemulsionszulauf die anionischen Emulgatoren, wohingegen die wässrige Vorlage keine anionischen Emulgatoren enthält.

Ein weiterer vorteilhafter Unterschied zu dem in EP-B 0037923 beschriebenen Verfahren ist im unterschiedlichen Gehalt an Polymerisationsinhibitoren in den zulaufenden Monomerenemulsionen zu sehen. Im Verfahren des genannten Standes der Technik muss die Monomerenemulsion 50 bis 500 ppm, bezogen auf die Monomerenmenge, an Polymerisationsinhibitor enthalten, d.h. es muss Polymerisationsinhibitor in relativ grosser Menge zugesetzt werden. Beim erfindungsgemässen Verfahren kann die Monomerenemulsion weniger als 50 ppm Polymerisationsinhibitor enthalten. Polymerisationsinhibitoren wie z.B. Hydrochinon, Hydrochinonmonomethylether, tert.Butylbrenzkatechin oder Phenothiazin, werden bekanntlich den Monomeren zugesetzt, um eine unerwünschte Polymerisation während der Lagerung der Monomeren zu verhindern. Die Monomeren enthalten diese Polymerisationsinhibitoren im allgemeinen in einer Menge von 10 bis fast 50 ppm, d.h. für das erfindungsgemässe Verfahren ist kein gesonderter Inhibitor-Zusatz erforderlich. Es war überraschend, unter diesen Bedingungen hochkonzentrierte Polymerdispersionen mit Feststoffgehalten von über 65 und insbesondere über 68 Gew.% zu erhalten.

Nach dem erfindungsgemässen Verfahren werden für die Emulsionspolymerisation Monomerenmischungen verwendet, die mindestens 50 Gew.% der Gesamtmonomerenmenge an Estern der Acrylsäure und/oder Methacrylsäure mit Alkoholen mit 1 bis 18 und insbesondere 2 bis 10 C-Atomen enthalten. Als Monomere und Comonomere werden nach Art und Menge solche ausgewählt, die sicherstellen, dass die resultierenden Copolymerisate Glasübergangstemperaturen $T_g$ von nicht mehr als 0 °C und insbesondere -60 bis ± 0 °C aufweisen und sich hinsichtlich Adhäsion und Tack für die Verwendung als wässrige Haftklebstoffdispersionen eignen. Für diesen Verwendungszweck sind die möglichen Comonomeren oft nur in begrenzten Mengen oder Mengenbereichen verwendbar.

Für die Erzielung der gewünschten Glasübergangstemperaturen $T_g$ durch Auswahl geeigneter Arten und Mengen von Monomeren ist die Formel von Fox (T.G.Fox, Bull.Amer.Physic.Soc. (Ser.II) 1,123 (1956)) hilfreich, nach der für die Glasübergangstemperatur $T_g$ von Copolymerisaten in guter Näherung gilt:

$$\frac{1}{T_g} = \frac{X^1}{T_g{}^1} + \frac{X^2}{T_g{}^2} + \ldots + \frac{X^S}{T_g{}^S}$$

worin $X^1$, $X^2$ ...$X^s$ die Massenbrüche der Monomeren, $T_g{}^1$, $T_g{}^2$ ... $T_g{}^S$ die Glasübergangstemperaturen der jeweils nur aus einem der Monomeren 1,2,...S aufgebauten Homopolymerisate in Grad Kelvin bedeuten.

Die Glasübergangstemperaturen der Homopolymerisate der üblichen Monomeren sind bekannt und z.B. in J.Brandrup und E.H. Immergut, Polymer Handbook, 2.Auflage, J.Wiley Verlag,New York 1995, aufgelistet.

Bevorzugte Copolymerisate für die Verwendung als Haftklebstoffe weisen ferner einen K-Wert von 50 bis 130, insbesondere 80 bis 120 und besonders bevorzugt von 90 bis 110 auf, wobei der K-Wert (nach H.Fikentscher, Cellulosechemie 13,58-60 (1932)) das mittlere Molekulargewicht charakterisiert. Der K-Wert ist eine relative Viskositätszahl, die analog DIN 53 726 bestimmt wird und die Fliessgeschwindigkeit einer 1 gew.%igen Lösung des Copolymerisats in Tetrahydrofuran relativ zur Fliessgeschwindigkeit von reinem Tetrahydrofuran enthält. Der K-Wert lässt sich durch während der Copolymerisation anwesende Regler sowie Reduktionsmittel (Art und Menge) einstellen.

Als Ester der Acrylsäure und/oder Methacrylsäure von geradkettigen und verzweigtkettigen Alkoholen (vorzugsweise Alkanolen) mit 1 bis 18 und insbesondere 2 bis 10 C-Atomen seien beispielhaft die Ester mit Methanol, Ethanol, Propanol, Isopropanol, n-Butanol, Isoamylalkohol, 2-Ethylhexanol und Isooctanol genannt.

Als hartmachende Comonomere sind olefinisch ungesättigte Carbonsäuren mit 3 bis 5 C-Atomen. Vinylsulfonsäure sowie nicht vernetzend wirkende Anhydride, Amide, Imide und Salze dieser Säuren allein oder im Gemisch miteinander geeignet, wie Acrylsäure, Methacrylsäure, Maleinsäure, Maleinsäureanhydrid, Fumarsäure, Crotonsäure, Itaconsäure, Vinylsulfonsäure, Natriumvinylsulfonat, Natriumacrylat, Acrylamid, Methacrylamid, N-Methylolacrylamid, N-Methylolmethacrylamid, Acrylamidoglykolsäure usw.. Diese Comonomeren werden insbesondere in Mengen von jeweils 0,01 bis 5 und insbesondere 0,1 bis 2 Gew.%, bezogen auf die Gesamtmonomerenmenge mitverwandt. Besonders bevorzugt ist die Verwendung von Acrylsäure als Comonomeres in den angegebenen Mengen und bevorzugt in einer Menge von 0,2 bis 1 Gew.%, bezogen auf die Gesamtmonomerenmenge. N-Methylolacrylamid und N-Methylolmethacrylamid werden bevorzugt in einer Menge von bis zu 2,5 Gew.% der Gesamtmonomerenmenge verwendet.

Als hartmachende Comonomere sind auch Vinylaromaten mit 8 bis 12 C-Atomen wie Styrol, α-Methylstyrol, o- und p-Methylstyrol, Acrylnitril, Methacrylnitril, Methylmethacrylat sowie Vinylester von Carbonsäuren mit 1 bis 20 C-Atomen wie Vinylacetat, Vinylpropionat, Vinyllaurat, Vinylstearat oder Vinylester von Versaticsäuren® (gesättigte Carbonsäuren mit längeren Seitenketten und tertiären COOH-Gruppen, hergestellt aus Olefinen, Kohlenmonoxid und Wasser) geeignet. Die im vorstehenden Satz genannten Comonomeren werden im allgemeinen in Mengen von 0,01 bis 15 Gew.% der Gesamtmonomerenmenge verwendet. Die Vinylester können aber in einer Menge bis zu 20 Gew.% verwendet werden, Styrol wird insbesondere in einer Menge von 0,01 bis 7,5 und bevorzugt in einer Menge von 0.5 bis 3 Gew.%, Vinylacetat bevorzugt in einer Menge von 1,0 bis 10 Gew.%, Acrylnitril und Methacrylnitril bevorzugt in einer Menge von bis zu 7,5 Gew.% verwendet, wobei sich hier stets Gew.% auf die Gesamtmonomerenmenge bezieht. Bedeutsam als Comonomere für die Herstellung von wässrigen Haftkleberdispersionen sind auch Ester der Acryl- und/oder Methacrylsäure mit mehrwertigen Alkoholen, insbesondere Glykolen, wie 2-Hydroxyethyl- oder 2-Hydroxypropylacrylat, die in Mengen bis 15, insbesondere 0,01 bis 10 und besonders bevorzugt 0,1 bis 7,5 Gew.% der Gesamtmonomerenmenge verwendet werden. Als Comonomere seien schliesslich auch N-Vinylpyrrolidon, und Vinylether wie Vinylmethylether oder Vinyl-n-butylether genannt.

Die genannten Monomeren können für die Herstellung hochkonzentrierter Dispersionen beliebig miteinander kombiniert werden, soweit sie den Eigenschaftsanforderungen für das resultierende Copolymerisat für dessen Verwendung als Haftkleber entsprechen. Nach der EP-B 0 037 923 (Spalte 1, Zeilen 36 bis 41) ist die Herstellung hochkonzentrierter wässriger Copolymerisatdispersionen mit bestimmten Bedingungen für die Monomerenauswahl verbunden: erst durch die Kombination von Monomeren, die für sich nicht miteinander copolymerisieren (wie Styrol und Vinylacetat) werden Copolymerisatdispersionen mit hohem Feststoffgehalt erreicht. Diese Einschränkungen bezüglich der Monomerenauswahl gelten für das erfindungsgemässe Verfahren nicht, das somit deutlich breiter anwendbar ist.

Gemäss dem erfindungsgemässen Verfahren wird die Polymerisation im allgemeinen bei 30 bis 110, bevorzugt bei 70 bis 95 °C durchgeführt. Die Polymerisation kann unter leichtem Unterdruck begonnen, ab etwa 200 mbar, wie auch unter Überdruck bis etwa 10 bar durchgeführt werden. Die Zuführung der Monomerenemulsion wie auch der Initiatorzulauf kann sowohl über den Kesseldom auf die gerührte Reaktionsmischung, als auch durch den Kesselboden in die gerührte Reaktionsmischung erfolgen, wobei der letztgenannte Zulauf von unten bevorzugt ist. Ein derartiges Verfahren der Zuführung ist z.B. für die Lösungspolymerisation in der DE-C 4020767 beschrieben.

Die Zuläufe des Polymerisationsinitiators und der Monomerenemulsion können getrennt dem Polymerisationsreaktor zugeführt werden. Sie können aber auch vor Eintritt in den Reaktionskessel miteinander gemischt werden, was bevorzugt ist. Das Vermischen kann durch statische oder dynamische Mischer erfolgen. Die Initiatorlösung kann in der gleichen Zeitperiode wie die Monomerenemulsion dem Reaktorkessel zugeführt werden, die Zuführung der Initiatorlösung kann aber auch vor Ende des Zulaufs der Monomerenemulsion (z.B. eine 1/2 Stunde zuvor) beendet, aber auch z.B. erst 1/2 bis 1 Stunde nach Ende des Monomerenemulsionszulaufs beendet werden. Bevorzugt ist eine zeitgleiche Zuführung von Monomerenemulsion und Initiatorlösung in den Polymerisationsreaktor, insbesondere bei einer Verfahrensweise, bei der die Einlaufstutzen für die Zuläufe im Kesseldom angebracht sind.

Beim Zulauf der Monomerenemulsion wird am Anfang so vorgegangen, dass 1 bis 10 Gew.% der Monomerenemulsion innerhalb von 1/4 bis 1 Stunde ab Zulaufbeginn in pro Zeiteinheit zunehmender Menge der Vorlage zugefahren werden. Hier kann mit einer Zulaufgeschwindigkeit von nur wenigen Litern pro Stunde, z.B. 30 bis 60 Litern pro Stunde begonnen werden, die dann stark. z.B. auf das Mehrfache der Zulaufgeschwindigkeit, insbesondere das 3- bis 10-fache der anfänglichen Zulaufgeschwindigkeit, innerhalb der folgenden 3/4 Stunde gesteigert wird.

Nach der genannten Anfangsperiode wird die Hauptmenge der Monomerenemulsion dann in üblicher Art in kleinen Zeitabständen oder stetig dem Polymerisationsreaktor zugefahren, wobei die Zulaufgeschwindigkeit wesentlich von der Polymerisationsgeschwindigkeit der zulaufenden Monomeren im Reaktor mitbestimmt wird.

Nach Beendigung des Monomerenzulaufs können zur Vervollständigung des an sich schon hohen Polymerisationsumsatzes die gemäss dem erfindungsgemässen Verfahren hergestellten Dispersionen einer Nachpolymerisation unterzogen werden. Dabei werden nach Beendigung des Zulaufs der Monomerenemulsion bei einer Temperatur von 30 bis etwa 90°C der Dispersion Polymerisationsinitiatoren und bevorzugt auch Reduktionsmittel zugegeben. Solche Kombinationen eines Polymerisationsinitiators mit einem Reduktionsmittel sind insbesondere tert.Butylhydroperoxid/Natriumbisulfit, tert. Butylhydroperoxid/Acetonbisulfit, und Wasserstoffperoxid /Ascorbinsäure, ggf. in Kombination mit mehrwertigen Metallionen wie komplexierten Eisen(II)salzen. Bevorzugt sind Nachpolymerisierungsmittel, die in der wässrigen Phase der Dispersion die Konzentration an anorganischen Salzen nicht erhöhen.

Die erfindungsgemässen hochkonzentrierten wässrigen Copolymerisatdispersionen werden gewünschtenfalls (physikalisch) desodoriert, insbesondere durch Behandlung mit Dampf, d.h. die Haftklebstoffdispersion wird durch Hindurchleiten von Wasserdampf desodoriert, wobei flüchtige Anteile, die oft einen unerwünschten Geruch der Dispersion verursachen und die auch toxisch sein können, entfernt werden. Ein solches Desodorierverfahren ist z.B. in der DE-C 1248943 beschrieben. Das Desodorieren kann auch so erfolgen, dass zusätzlich Luft oder Gas, z.B. Stickstoff, aus Düsen austretend durch die Dispersion geleitet wird. Die Temperatur der Dispersion beim Desodorieren beträgt im allgemeinen 50 bis 110 und bevorzugt 65 bis 90 °C. Das verwendete, an sich für Polymerisatdispersionen bekannte Desodorierverfahren kann diskontinuierlich oder kontinuierlich sein. Es ist überraschend, dass die erfindungsgemäss hergestellten hochkonzentrierten Copolymerisatdispersionen mit über 65 Gew.% Feststoffgehalt desodorierstabil sind, d.h. sich ohne wesentliche Koagulatbildung desodorieren lassen. Dies ist von ganz besonderem Vorteil für die Verwendung der hochkonzentrierten Copolymerisatdispersionen als Haftklebstoff, insbesondere für selbstklebende Etiketten wie Papieretiketten, wofür auch eine hohe Scherfestigkeit der harzmodifizierten Copolymerisatdispersionen gefordert wird.

Die nachstehenden Beispiele und Vergleichsversuche sollen das Verfahren der Erfindung weiter erläutern, jedoch nicht beschränken.

Die angegebenen Viskositätswerte (mPas) wurden nach Brookfield gemäss ISO 2555 mit dem Rotationsviskosimeter bestimmt.

Die angegebenen Koagulatgehalte wurden aus der Bestimmung des Siebrückstandes ermittelt, wobei in Abänderung von DIN 53786 jeweils 1 kg der Copolymerisatdispersion über ein Sieb der Maschenweite 0,125 mm filtriert wurden. Der Siebrückstand wurde mit destilliertem Wasser gewaschen, dann getrocknet und danach gewogen.

Die Angabe erfolgt in Prozent, bezogen auf die Copolymerisatdispersion.

Zur Beurteilung des Stippengehalts (Stippenbenotung) werden Polyesterfolien mit Hilfe einer Rakel mit der jeweiligen Copolymerisatdispersion so beschichtet, dass ein Auftragsgewicht von 19-21 g/m$^2$ resultiert. Die Folien werden bei Raumtemperatur in staubfreier Atmosphäre getrocknet. Dann wird im Gegenlicht der Stippengehalt anhand einer von 1 (sehr gut, keine Stippen) bis 5 (sehr schlecht, viele Stippen) reichenden Notenskala beurteilt.

Zur Beurteilung der Haftklebeeigenschaften wurde die Scherfestigkeit(harzmodifiziert) geprüft, eine Eigenschaft, die für die technische Beurteilung von Haftklebstoffen für selbstklebende Etiketten, besonders Papieretiketten, bedeutsam ist. Für die Prüfung wird ein Prüfstreifen hergestellt. Die zu prüfende Polymerisatdispersion wird im Verhältnis 7/3 (bezogen auf Feststoff) mit einer handelsüblichen wässrigen Kolophoniumharzester-Dispersion abgemischt. Die Mischung wird dann mit einer Rakel in dünner Schicht auf ein silikonisiertes Papier aufgetragen und getrocknet, wobei die Spaltbreite der Rakel so gewählt wird, dass sich für den getrockneten Klebstoff eine Auftragsmenge von 19-21 g/m$^2$ ergibt. Auf die Schicht des getrockneten Klebstoffs wird handelsübliches weisses Etikettenpapier aufgelegt und mit einem Handroller fest angerollt. Das so hergestellte Etikettenlaminat wird in Streifen von 0,5 inch (12,7 mm) Breite geschnitten, und die Streifen werden vor der Prüfung mindestens 24 Stunden bei 23 °C und 50 % relativer Luftfeuchtigkeit gelagert.

Die Prüfung der Scherfestigkeit erfolgt in Anlehnung an FINAT FTM 7: Nach Abziehen des silikonisierten Papiers wird der Etiketten-Prüfstreifen so auf den Rand eines Prüfblechs aus Edelstahl geklebt, dass sich eine Verklebungsfläche von 0,5 inch x 0,5 inch (12,7 mm x 12,7 mm) ergibt. 20 Minuten nach dem Verkleben wird am überstehenden Ende des Papierstreifens ein 500 g-Gewicht befestigt und das Prüfblech im Klima von 23 °C und 50 % relativer Luftfeuchtigkeit senkrecht aufgehängt. Als Scherfestigkeit (harzmodifiziert) wird die Zeit bis zum Versagen der Verklebung unter dem Einfluss des Gewichts als Mittelwert aus den Ergebnissen von 3 Prüfkörpern in Minuten angegeben.

Die Glasübergangstemperaturen wurden nach der DSC-Methode nach ASTM 3418/82 bestimmt.

Beispiel 1

In einem druckfesten, rührbaren Reaktor wurde eine wässrige Vorlage aus 63,5 l entmineralisiertem Wasser, 22,4 l einer 3 %igen wässrigen Tetranatriumpyrophosphatlösung, 0,34 kg Ascorbinsäure und 13,1 l einer 7 %igen wässrigen Natriumpersulfat-Lösung auf 80 °C erwärmt. Innerhalb von 4 Stunden wurde eine Monomerenemulsion dem Reaktor zugegeben, hergestellt aus 74,9 l Wasser, 18,3 l der 35 %igen wässrigen Lösung des Natriumsalzes des Schwefelsäureesters von mit 25 Mole Ethylenoxid ethoxyliertem Isooctylphenol, 4,5 l einer 25 %igen wässrigen Lösung von Natriumvinylsulfonat, 13,4 l einer 20 %igen wässrigen Lösung von Natriumlaurylsulfat, 12,2 l 10 %igen wässriger Natronlauge, 15,2 l Styrol, 57,0 l Methylmethacrylat, 59,1 l Vinylacetat, 609,7 l 2-Ethylhexylacrylat und 3,4 l Acrylsäure (Inhibitormenge <50ppm). Zu Beginn betrug der Zulauf 6 Minuten lang 46,36 l / Stunde und wurde anschliessend gleichmässig innerhalb von 40 Minuten auf 231,8 l/Stunde erhöht. Ab Beginn des Monomerenemulsionszulaufs wurden innerhalb von 5 Stunden 52,4 l einer wässrigen Lösung von Natriumperoxodisulfat zugegeben. wobei eine Polymerisationstemperatur von 85 bis 87 °C im Polymerisationsreaktor gehalten wurde.

Am Ende der Polymerisation wurden bei ca. 70 °C 7 l einer 10 %igen Lösung von tert. Butylhydroperoxid und gleichzeitig eine Lösung von 0,69 kg Natriumbisulfit, 0,43 kg Aceton und 11,1 l Wasser innerhalb einer Stunde zugegeben.

Es wurde eine koagulat- und stippenfreie Copolymerisatdisper-sion mit einem K-Wert von 85 und einem Feststoffgehalt von 70,3 % erhalten. Die Glasübergangstemperatur des Copolymerisats betrug -40 °C.

In einem Kessel wird unter Rühren während etwa 3 Stunden durch die erhaltene Dispersion Dampf geleitet, wobei die hochkonzentrierte gerührte Copolymerisatdispersion bei einer Temperatur von etwa 70 °C gehalten wurde. Der Dampf wurde dann über Kondensatoren zur Abscheidung von flüchtigen Anteilen geführt. Die mitgerissene wässrige Dispersion wurde dabei abgeschieden und in den Reaktionskessel zurückgeführt. Die desodorierte wässrige Copolymerisatdispersion war koagulatarm, stippenarm und gut filtrierbar. Die gemessenen Werte zeigt Tabelle 1.

Vergleichsversuch 1

Es wurde wie in Beispiel 1 der EP-B 0037923 angegeben eine 70 %ige koagulat- und stippenfreie Copolymerisatdispersion hergestellt. Sie wurde genau wie im vorstehenden Beispiel 1 angegeben durch Hindurchleiten von Wasserdampf desodoriert. Die erhaltene desodorierte hochkonzentrierte wässrige Copolymerisatdispersion war koagulatreich und schlecht filtrierbar. Die erhaltenen Werte zeigt Tabelle 1.

Tabelle 1

| Eigenschaften der desodorierten Dispersionen | | |
|---|---|---|
| Dispersion gemäss | Beispiel 1 | Vergleichsversuch 1 |
| Koagulatgehalt | 0,014 % | 0,953 % |
| Stippennote | 2 | 5 |
| Filtrierbarkeit | gut | sehr schlecht |

Beispiel 2

Es wurde wie in Beispiel 1 angegeben verfahren, jedoch wurde in den Monomerenemulsionszulauf während der 4-stündigen Zu-laufzeit eine Lösung von 0,34 kg Ascorbinsäure in 11,1 l Wasser gegeben. Man erhielt eine koagulatfreie und stippenfreie wässrige Copolymerisatdispersion mit einem Feststoffgehalt von 71 %. Die gemessenen Werte der Viskosität, des K-Wertes und der Scherfestigkeit(harzmodifiziert) zeigt Tabelle 2. Die Dispersion wurde wie in Beispiel 1 angegeben desodoriert, wobei eine koagulatarme und stippenarme Haftklebstoffdispersion erhalten wurde.

Beispiele 3 bis 6

Es wurde genau wie in Beispiel 2 verfahren, d.h. Beispiel 2 wurde 4 mal wiederholt, um die Reproduzierbarkeit der Eigenschaften der erfindungsgemässen Verfahrensprodukte zu testen. Die in Tabelle 2 angegebenen Werte der Viskositäten, K-Werte und der Scherfestigkeiten(harzmodifiziert) zeigen, dass sich die Eigenschaften der Produkte des erfindungsgemässen Verfahrens in engen Grenzen reproduzieren lassen.

Tabelle 2

| Reproduzierbarkeit von Produkteigenschaften | | | |
|---|---|---|---|
| Beispiel | Viskosität(mPas) | K-Wert | Scherfestigkeit(Min.) |
| 2 | 760 | 93,4 | 40 |
| 3 | 708 | 94,1 | 35 |
| 4 | 695 | 95 | 45 |
| 5 | 666 | 93 | 41 |
| 6 | 680 | 94 | 45 |

Vergleichsversuche 2 bis 4

Genau wie in Beispiel 7 der EP-B 0037923 angegeben, wurde eine hochkonzentrierte Copolymerisatdispersion hergestellt und deren Feststoffgehalt mit entionisiertem Wasser auf 69,5 % eingestellt. Diese Herstellung der Dispersion wurde 2 mal wiederholt (Vergleichsversuche 3 + 4) und bei allen 3 Verfahrensprodukten wurde die Viskosität und die Scherfestigkeit(harzmodifiziert) gemessen. Die Werte zeigt Tabelle 3. Sie zeigen, dass die Viskosität erheblich höher ist und stark schwankt.

Tabelle 3

| Reproduzierbarkeit von Produkteigenschaften (Vergleichsverfahren) | | |
|---|---|---|
| Vergleichsversuch | Viskosität(mPas) | Scherfestigkeit (Min.) |
| 2 | 1350 | 14,5 |
| 3 | 1050 | 15,4 |
| 4 | 1590 | 12,5 |

Beispiel 4

Es wurde genau wie in Beispiel 1 angegeben verfahren, jedoch wurden die 59,1 l Vinylacetat durch die gleiche Menge an Methylmethacrylat ersetzt. Es wurde eine desodorierstabile wässrige Haftkleberdispersion mit einem Feststoffgehalt von 70,6 % und einem Koagulatgehalt von 0,008 % erhalten.

**Patentansprüche**

**1.** Verfahren zur Herstellung hochkonzentrierter wässriger Haftklebstoffdispersionen auf der Basis von Copolymerisaten von Estern der Acryl- und/oder der Methacrylsäure, wobei die Copolymerisate Glasübergangstemperaturen von nicht mehr als 0 °C aufweisen, durch Emulsionspolymerisation in Gegenwart üblicher Emulgatoren und radikalischer Polymerisationsinitiatoren nach dem Monomerenemulsionszulaufverfahren, bei dem die Monomerenemulsion im Zulauf dem Polymerisationsreaktor. zugefahren wird,

**dadurch gekennzeichnet,**

**dass** man die Emulsionspolymerisation einer Monomerenmischung aus (A) mindestens 50 Gew.% der Gesamtmonomerenmenge mindestens eines Esters der Acryl- und/oder Methacrylsäure mit Alkoholen mit 1 bis 18 C-Atomen und (B) anderen olefinisch ungesättigten Monomeren (Comonomeren)

> a) in Gegenwart von weniger als 50 ppm Polymerisations-inhibitor, bezogen auf die Monomerenmenge, nach dem Emulsionszulaufverfahren so durchführt, dass
> b) zur auf 30 bis 110 °C erhitzten wässrigen Vorlage im Polymerisationsreaktor
> c) 1 bis 10 Gew.% der im Zulauf zugegebenen Menge der Monomerenemulsion innerhalb von 1/4 bis 1 Stunde ab Zulaufbeginn in pro Zeiteinheit zunehmender Menge zugegeben wird, und
> d) danach die restliche Monomerenemulsion nach Maßgabe der Polymerisation der Monomeren zugefahren wird.

2. Verfahren zur Herstellung von hochkonzentrierten wässrigen Haftklebstoffdispersionen nach Anspruch 1, **dadurch gekennzeichnet, daß** die Emulsionspolymerisation der Monomerenmischung in Gegenwart von 0,01 bis 5 Gew. %, bezogen auf die Monomerenmenge, eines Reduktionsmittels durchgeführt wird.

3. Verfahren zur Herstellung von hochkonzentrierten wässrigen Haftklebstoffdispersionen nach Anspruch 1 oder 2, **dadurch gekennzeichnet, dass** nach Beendigung des Zulaufs der Monomerenemulsion und vor dem Desodorieren eine Nachpolymerisation bei 30 bis 90 °C unter Zugabe von Polymerisationsinitiator und Reduktionsmittel durchgeführt wird.

4. Verfahren zur Herstellung von hochkonzentrierten wässrigen Haftklebstoffdispersionen nach einem der Ansprüche 1 - 3, **dadurch gekennzeichnet, dass** die Emulsionspolymerisation in Gegenwart von 0,01 bis 5 Gew.% eines organischen Reduktionsmittels erfolgt.

5. Verfahren zur Herstellung von hochkonzentrierten wässrigen Haftklebstoffdispersionen nach Anspruch 4, **dadurch gekennzeichnet, dass** als organisches Reduktionsmittel Ascorbinsäure verwendet wird.

6. Verfahren zur Herstellung von hochkonzentrierten wässrigen Haftklebstoffdispersionen nach einem der Ansprüche 1 - 5, **dadurch gekennzeichnet, dass** die wässrige Vorlage im Polymerisationsreaktor vor dem Zulauf der Monomerenemulsion keinen anionischen Emulgator enthält.

7. Verfahren zur Herstellung von hochkonzentrierten wässrigen Haftklebstoffdispersionen nach einem der Ansprüche 1 - 6, **dadurch gekennzeichnet, dass** die wässrige Vorlage im Polymerisationsreaktor vor dem Zulauf der Monomerenemulsion 1 bis 7 Gew.%, bezogen auf die Menge der wässrigen Vorlage, mindestens eines wasserlöslichen Salzes enthält.

8. Verfahren zur Herstellung von hochkonzentrierten wässrigen Haftklebstoffdispersionen nach einem der Ansprüche 1 - 7, **dadurch gekennzeichnet, dass** das verwendete Monomerengemisch keine Monomeren enthält, die für sich allein nicht miteinander copolymerisieren, wie Styrol und Vinylacetat.

9. Verfahren zur Herstellung von hochkonzentrierten wässrigen Haftklebstoffdispersionen nach einem der Ansprüche 1 - 8, **dadurch gekennzeichnet, dass** als hartmachende olefinisch ungesättigte Comonomere (B) olefinisch ungesättigte Carbonsäuren mit 3 bis 5 C-Atomen, Vinylsulfonsäure und/oder nicht vernetzend wirkende Anhydride, Amide, Imide und/oder Salze dieser Säuren in einer Menge von 0,01 bis 5 Gew.% der Gesamtmonomerenmenge mitverwendet werden.

10. Verfahren zur Herstellung von hochkonzentrierten wässrigen Haftklebstoffdispersionen nach einem der Ansprüche 1 - 9, **dadurch gekennzeichnet, dass** als hartmachende olefinisch ungesättigte Comonomere (B) Methylme-thacrylat, Acrylnitril, Styrol, $\alpha$-Methylstyrol oder Vinylacetat in Mengen von 0.01 bis 15 Gew.% der Gesamtmonomerenmenge verwendet werden.

11. Verfahren zur Herstellung von hochkonzentrierten wässrigen Haftklebestoffdispersionen nach einem der Ansprüche 1 - 10, **dadurch gekennzeichnet, dass** die resultierenden hochkonzentrierten wässrigen Haftklebstoffdispersionen einen Feststoffgehalt von über 65 Gew.% aufweisen.

12. Verfahren zur Herstellung von hochkonzentrierten wässrigen Haftklebestoffdispersionen nach einem der Ansprüche 1 - 11, **dadurch gekennzeichnet, dass** die Polymerisate in den resultierenden hochkonzentrierten wässrigen Haftklebstoffdispersionen Glasübergangstemperaturen von - 60 °C bis ± 0 °C haben.

13. Verfahren zur Herstellung von hochkonzentrierten wässrigen Haftklebestoffdispersionen nach einem der Ansprüche 1- 12, **dadurch gekennzeichnet, dass** nach Beendigung der Emulsionspolymerisation die resultierende hochkonzentrierte wässrige Haftklebstoffdispersion durch Hindurchleiten von Wasserdampf desodoriert wird.

14. Verwendung der gemäß einem der Verfahren der Ansprüche 1 bis 13 erhältlichen hochkonzentrierten wässrigen Polymerisatdispersionen als Haftklebstoff, insbesondere für selbstklebende Etiketten.

15. Hochkonzentrierte wässrige Haftklebstoffdispersionen auf der Basis von Copolymerisaten von Estern der Acryl- und/oder der Methacrylsäure, wobei die Copolymerisate Glasübergangstemperaturen von nicht mehr als 0°C aufweisen, erhältlich nach einem der Verfahren der Ansprüche 1 - 13.

## Claims

1. A process for preparing highly concentrated, aqueous dispersions of pressure-sensitive adhesive on the basis of copolymers of esters of acrylic and/or methacrylic acid, the copolymers having glass transition temperatures of not more than 0°C, by emulsion polymerization in the presence of customary emulsifiers and free-radical polymerization initiators in accordance with the monomer emulsion feed polymerization technique, in which the monomer emulsion is run in a feed stream into the polymerization reactor,
   which comprises
   conducting the emulsion polymerization of a monomer mixture comprising (A) at least 50% by weight of the overall monomer amount of at least one ester of acrylic and/or methacrylic acid with alcohols of 1 to 18 C atoms and (B) other olefinically unsaturated monomers (comonomers)

   a) in the presence of less than 50 ppm of polymerization inhibitor, based on the amount of monomers, by the emulsion feed technique, such that

   b) the aqueous initial charge to the polymerization reactor is heated at from 30 to 110°C, and

   c) from 1 to 10% by weight of the amount of the monomer emulsion added in the feed stream is added to this initial charge over the course of 1/4 to 1 hour from the beginning of the feed and at an increasing rate (amount per unit time), and

   d) then the remainder of the monomer emulsion is run in in accordance with the extent of polymerization of the monomers.

2. A process for preparing highly concentrated, aqueous dispersions of pressure-sensitive adhesive as claimed in claim 1, wherein the emulsion polymerization of the monomer mixture is conducted in the presence of from 0.01 to 5 % by weight, based on the amount of monomers, of a reducing agent.

3. A process for preparing highly concentrated, aqueous dispersions of pressure-sensitive adhesive as claimed in claim 1 or 2, wherein, after the end of the feed of the monomer emulsion and before the deodorization, postpolymerization is carried out at from 30 to 90°C with the addition of polymerization initiator and reducing agent.

4. A process for preparing highly concentrated, aqueous dispersions of pressure-sensitive adhesive as claimed in any of claims 1 - 3, wherein the emulsion polymerization takes place in the presence of from 0.01 to 5% by weight of an organic reducing agent.

5. A process for preparing highly concentrated, aqueous dispersions of pressure-sensitive adhesive as claimed in claim 4, wherein ascorbic acid is used as organic reducing agent.

6. A process for preparing highly concentrated, aqueous dispersions of pressure-sensitive adhesive as claimed in any of claims 1 - 5, wherein the aqueous initial charge in the polymerization reactor, prior to the feed of the monomer emulsion, contains no anionic emulsifier.

**7.** A process for preparing highly concentrated, aqueous dispersions of pressure-sensitive adhesive as claimed in any of claims 1 - 6, wherein the aqueous initial charge in the polymerization reactor, prior to the feed of the monomer emulsion, contains from 1 to 7% by weight, based on the amount of the aqueous initial charge, of at least one water-soluble salt.

**8.** A process for preparing highly concentrated, aqueous dispersions of pressure-sensitive adhesive as claimed in any of claims 1 - 7, wherein the monomer mixture used comprises no monomers which do not copolymerize with one another per se, such as styrene and vinyl acetate.

**9.** A process for preparing highly concentrated, aqueous dispersions of pressure-sensitive adhesive as claimed in any of claims 1 - 8, wherein olefinically unsaturated carboxylic acids having 3 to 5 C atoms, vinylsulfonic acid and/ or noncrosslinking anhydrides, amides, imides and/or salts of these acids are also used as hardening olefinically unsaturated comonomers (B), in an amount of from 0.01 to 5% by weight of the overall monomer amount.

**10.** A process for preparing highly concentrated, aqueous dispersions of pressure-sensitive adhesive as claimed in any of claims 1 - 9, wherein methyl methacrylate, acrylonitrile, styrene, $\alpha$-methylstyrene or vinyl acetate in amounts of from 0.01 to 15% by weight of the overall monomer amount are used as hardening olefinically unsaturated comonomers (B).

**11.** A process for preparing highly concentrated, aqueous dispersions of pressure-sensitive adhesive as claimed in any of claims 1 - 10, wherein the resulting, highly concentrated, aqueous dispersions of pressure-sensitive adhesive have a solids content of more than 65% by weight.

**12.** A process for preparing highly concentrated, aqueous dispersions of pressure-sensitive adhesive as claimed in any of claims 1 - 11, wherein the polymers in the resulting, highly concentrated, aqueous dispersions of pressure-sensitive adhesive have glass transition temperatures of from - 60°C to $\pm$ 0°C.

**13.** A process for preparing highly concentrated, aqueous dispersions of pressure-sensitive adhesive as claimed in any of claims 1 - 12, wherein after the end of the emulsion polymerization the resulting, highly concentrated, aqueous dispersion of pressure-sensitive adhesive is deodorized by passing steam through it.

**14.** The use of a highly concentrated, aqueous polymer dispersion obtainable as claimed in any of claims 1 to 13 as a pressure-sensitive adhesive, especially for self-adhesive labels.

**15.** A highly concentrated, aqueous dispersion of pressure-sensitive adhesive on the basis of copolymers of esters of acrylic and/or methacrylic acid, the copolymers having glass transition temperatures of not more than 0°C, obtainable by a process as claimed in any of claims 1 - 13.

**Revendications**

**1.** Procédé de préparation de dispersions aqueuses fortement concentrées d'un adhésif de contact à base de copolymères d'esters de l'acide acrylique et/ou de l'acide méthacrylique, où les copolymères ont des températures de transition vitreuse non supérieures à 0°C, par polymérisation en émulsion en présence d'émulsifiants usuels et d'amorceurs de polymérisation radicalaire par le procédé des charges d'émulsions de monomères, dans lequel l'émulsion de monomères est envoyée sous forme d'une charge dans le réacteur de polymérisation,

**caractérisé en ce qu'**on met en oeuvre la polymérisation en émulsion d'un mélange de monomères constitué (A) d'au moins 50 % en poids, par rapport à la quantité totale des monomères, d'au moins un ester de l'acide acrylique et/ou de l'acide méthacrylique et d'alcools ayant de 1 à 18 atomes de carbone, et (B) d'autres monomères ou comonomères à insaturation oléfinique,

a) en présence de moins de 50 ppm d'un inhibiteur de polymérisation, par rapport à la quantité des monomères, cette opération utilisant le procédé des charges d'émulsion, procédé dans lequel
b) on ajoute à la masse aqueuse en place, chauffée à une température de 30 à 110°C dans le réacteur de polymérisation,
c) de 1 à 10 % en poids de la quantité, ajoutée sous forme d'une charge, de l'émulsion de monomères, en 1/4 à 1 heure à compter du début de l'introduction de la charge, en une quantité augmentant par unité de temps, et

d) puis on ajoute le reste de l'émulsion de monomères, en fonction de la polymérisation des monomères.

2. Procédé de préparation de dispersions aqueuses fortement concentrées d'un adhésif de contact selon la revendication 1, **caractérisé en ce que** la polymérisation en émulsion du mélange de monomères est mise en oeuvre en présence de 0,01 à 5 % en poids, par rapport à la quantité de monomères, d'un agent réducteur.

3. Procédé de préparation de dispersions aqueuses fortement concentrées d'un adhésif de contact selon la revendication 1 ou 2, **caractérisé en ce que**, après la fin de l'introduction de la charge de l'émulsion de monomères et avant la désodorisation, on procède à une post-polymérisation à une température de 30 à 90°C par addition d'un amorceur de polymérisation et d'un réducteur.

4. Procédé de préparation de dispersions aqueuses fortement concentrées d'un adhésif de contact selon l'une des revendications 1 à 3, **caractérisé en ce que** la polymérisation en émulsion est réalisée en présence de 0,01 à 5 % en poids d'un réducteur organique.

5. Procédé de préparation de dispersions aqueuses fortement concentrées d'un adhésif de contact selon la revendication 4, **caractérisé en ce qu'**on utilise de l'acide ascorbique en tant que réducteur organique.

6. Procédé de préparation de dispersions aqueuses fortement concentrées d'un adhésif de contact selon l'une des revendications 1 à 5, **caractérisé en ce que** la masse aqueuse en place dans le réacteur de polymérisation ne contient aucun émulsifiant anionique avant introduction de la charge de l'émulsion de monomères.

7. Procédé de préparation de dispersions aqueuses fortement concentrées d'un adhésif de contact selon l'une des revendications 1 à 6, **caractérisé en ce que** la masse aqueuse en place dans le réacteur de polymérisation contient, avant introduction de la charge de l'émulsion de monomères, de 1 à 7 % en poids, par rapport à la quantité de la masse aqueuse en place, d'au moins un sel soluble dans l'eau.

8. Procédé de préparation de dispersions aqueuses fortement concentrées d'un adhésif de contact selon l'une des revendications 1 à 7, **caractérisé en ce que** le mélange de monomères utilisé ne contient pas de monomères qui, en soi, ne se copolymérisent pas les uns avec les autres, tels que le styrène et l'acétate de vinyle.

9. Procédé de préparation de dispersions aqueuses fortement concentrées d'un adhésif de contact selon l'une des revendications 1 à 8, **caractérisé en ce qu'**on utilise en tant que comonomères (B) durcisseurs à insaturation oléfinique des acides carboxyliques à insaturation oléfinique ayant de 3 à 5 atomes de carbone, de l'acide vinylsulfonique et/ou des anhydrides sans effet de réticulation, des amides, des imides et/ou des sels de ces acides, en une quantité de 0,01 à 5 % en poids par rapport à la quantité totale des monomères.

10. Procédé de préparation de dispersions aqueuses fortement concentrées d'un adhésif de contact selon l'une des revendications 1 à 9, **caractérisé en ce qu'**on utilise en tant que comonomère (B) durcisseur à insaturation oléfinique le méthacrylate de méthyle, l'acrylonitrile, le styrène, l'α-méthylstyrène ou l'acétate de vinyle, en des quantités de 0,01 à 15 % en poids par rapport à la quantité totale des monomères.

11. Procédé de préparation de dispersions aqueuses fortement concentrées d'un adhésif de contact selon l'une des revendications 1 à 10, **caractérisé en ce que** les dispersions aqueuses fortement concentrées d'un adhésif de contact telles qu'obtenues ont une teneur en extrait sec supérieure à 65 % en poids.

12. Procédé de préparation de dispersions aqueuses fortement concentrées d'un adhésif de contact selon l'une des revendications 1 à 11, **caractérisé en ce que** les polymères, dans les dispersions aqueuses fortement concentrées ainsi obtenues d'un adhésif de contact, ont des températures de transition vitreuse de -60 à ± 0°C.

13. Procédé de préparation de dispersions aqueuses fortement concentrées d'un adhésif de contact selon l'une des revendications 1 à 12, **caractérisé en ce que**, après la fin de la polymérisation en émulsion, on désodorise la dispersion aqueuse fortement concentrée ainsi obtenue d'un adhésif de contact par passage de vapeur d'eau.

14. Utilisation des dispersions aqueuses fortement concentrées de polymères pouvant être obtenue par l'un des procédés des revendications 1 à 13 en tant qu'adhésif de contact, en particulier pour étiquettes autocollantes.

15. Dispersions aqueuses fortement concentrées d'adhésifs de contact à base de copolymères d'esters de l'acide acrylique et/ou de l'acide méthacrylique, les copolymères ayant des températures de transition vitreuse non supérieures à 0°C, et pouvant être obtenues par l'un des procédés selon les revendications 1 à 13.